# EUROPÄISCHE PATENTSCHRIFT

(11) **EP 3 215 475 B1**
(45) Veröffentlichungstag und Bekanntmachung des Hinweises auf die Patenterteilung: **26.09.2018**
(21) Anmeldenummer: 15830762.9
(22) Anmeldetag: 27.10.2015
(51) Int. Cl.: C04B 33/04, B28B 1/26, D21J 3/00, D21J 3/04

(54) **VERFAHREN ZUR HERSTELLUNG EINES ISOLATIONSFORMTEILS, ISOLATIONSFORMTEIL, HERGESTELLT DURCH DIESES VERFAHREN UND GUSSWERKZEUG ZUR HERSTELLUNG EINES ISOLATIONSFORMTEILS UNTER ANWENDUNG DES VERFAHRENS**
METHOD FOR PRODUCING AN INSULATION MOLDED PART, INSULATION MOLDED PART PRODUCED BY THIS METHOD AND CASTING TOOL FOR PRODUCING AN INSULATION MOLDED PART USING THE PROCEDURE
PROCÉDÉ DE FABRICATION D'UNE PARTIE FORME D'ISOLATION, PARTIE FORME D'ISOLATION REALISE PAR CETTE METHODE ET CASTING OUTIL DE PRODUCTION D'UNE PARTIE FORME D'ISOLATION PAR UTILISATION DU PROCÉDÉ

(30) Priorität: 03.11.2014 DE 102014115940
(43) Veröffentlichungstag der Anmeldung: 13.09.2017
(73) Patentinhaber: Cuylits Holding GmbH, 49593 Bersenbrück (DE)
(72) Erfinder: FRANKE, Jörg, 49584 Fürstenau (DE); CUYLITS, Diederik, 49593 Bersenbrück (DE)
(74) Vertreter: Dr. Binder & Binder GbR
(86) Internationale Anmeldenummer: PCT/DE2015/100451
(87) Internationale Veröffentlichungsnummer: WO 2016/070866

(56) Entgegenhaltungen:
- EP-A1- 1 081 285
- CA-A- 1 041 559
- GB-A- 1 383 305

## Beschreibung

Die Erfindung betrifft ein Verfahren zur Herstellung eines Isolationsformteils, ein Isolationsformteil, hergestellt durch dieses Verfahren und ein Gusswerkzeug zur Herstellung eines Isolationsformteils unter Anwendung des Verfahrens.

Isolationsformteile, die passgenau mit einem zu isolierenden Gegenstück verbunden werden, sind in unterschiedlichen Ausprägungen bekannt und bereits im Einsatz. So gewinnt beispielsweise die Verwendung derartiger Isolationsformteile für die Isolierung einzelner Elemente im Motorraum oder des Abgasstranges in Kraftfahrzeugen eine zunehmende Bedeutung. Insbesondere die in einem Kraftfahrzeug verwendeten Katalysatoren müssen in möglichst kurzer Zeit auf ihre Betriebstemperatur gebracht und mit dieser betrieben werden, was eine entsprechend aufwändige Isolierung erfordert. Für diesen Einsatzzweck ist zum Beispiel ein Isolationsformteil erforderlich, das Temperaturen von 600° C bis über 1000 °C stand halten kann und das sich dabei optimal zwischen der Oberfläche des Katalysators und dessen Mantel einpassen lässt. Der einer thermischen und akustischen Abschirmung dienende Mantel des Katalysators wird in der Regel aus einem komplex geformten Lochblech hergestellt, in das zugeschnittene Glasfasermatten eingelegt werden. Dabei fallen naturgemäß erhebliche Mengen Abfälle an, die aufwändig entsorgt werden müssen. Eine Wiederverwendung der Glasfasermattenreste erfolgt in der Regel nicht. Zudem geht die Herstellung einer derartigen Isolation mit einem erheblichen Arbeitsaufwand einher, der letztlich auch die Herstellungskosten erhöht. Ein weiterer Nachteil besteht hierbei auch darin, dass sich die Glasfasermatten nicht optimal in die komplex gestalteten Geometrien des Mantels einpassen lassen und dadurch beispielsweise eine unerwünschte Faltenbildung gegeben ist, die letztlich zu einem vorzeitigen Verschleiß des Isolationsformteils und einer lokal eingeschränkten Isolierung des Katalysators führen kann.

Neben der Verwendung der bereits erwähnten Glasfasermatten zur Herstellung einer Isolation ist es auch bekannt, Isolationsformteile aus einer wässrigen Lösung mit darin eingebrachten Faseranteilen herzustellen. Das Gemisch aus Faseranteilen und Wasser unter Verwendung verschiedener Zusätze wird auch als "Pulpe" bezeichnet. Derartige Herstellungsverfahren für ein Isolationsformteil sind beispielsweise aus der DD 292 230 A5 bekannt, wobei die Pulpe hierbei jeweils Anteile organischer Verbindungen aufweist. Ein Nachteil der organischen Bestandteile in der Pulpe besteht darin, dass diese Bestandteile bei einer Erhitzung zu schädlichen oder zumindest störenden oder unerwünschten Emissionen führen, was insbesondere bei der eingangs bereits erwähnten Verwendung derartiger Isolationsformteile für die Isolierung einzelner Elemente im Motorraum oder des Abgasstranges in Kraftfahrzeugen eine wesentliche Bedeutung hat.

Aus der WO 2011/018457 A1 geht ferner ein Verfahren zur Herstellung eines formstabilen, aber nicht spröden Isolationsformteils aus einem faserförmigen Isolationswerkstoff hervor, in dem ein textiles Flächengebilde, welches Glasfasern und/oder Silikatfasern enthält, mit mindestens einem Silazan in Lösung oder als Feststoff beaufschlagt wird, was beispielsweise durch Imprägnieren erfolgen kann. Bei dem textilen Flächengebilde kann es sich um ein Vlies, ein Gestrick oder ein Gewebe handeln. Unter Silazan wird hierbei ein monomeres, oligomeres oder polymeres Silazan verstanden. Zur Aushärtung des Silazans muss zusätzlich ein Katalysator zum Einsatz kommen, wobei die Druckschrift zum Beispiel N-heterozyklische Verbindungen, Mono-, Di-, Trialkylamine, organische Säuren und ähnliche organische Stoffe oder Verbindungen offenbart. Diese organischen Zusätze weisen teilweise ebenfalls die zuvor erwähnten Nachteile auf. Darüber hinaus ist beispielsweise die Handhabung organischer Lösungsmittel wegen der damit verbundenen Gefahren für die Gesundheit und ihrer Brennbarkeit schwierig. Zudem entstehen zusätzliche Produktionskosten, weil zum Entfernen der organischen Bestandteile zumeist eine Nachverbrennung erforderlich wird.

Die DE 38 88 279 T2 betrifft ein Verfahren zur Herstellung einer keramischen Auskleidung, wobei eine Keramikaufschlämmung in eine Wasser absorbierende beziehungsweise Wasser aufnehmende Form eingebracht wird, bei der die Form zumindest eine wasserundurchlässige Abdichtung in einem Bereich aufweist, der nach der Fertigstellung der Auskleidung ein Ventilloch bildet. Durch Absorption beziehungsweise Aufnahme von Wasser aus der Keramikaufschlämmung wird dabei eine Ablagerung des in der Keramikaufschlämmung enthaltenen Keramikrohmaterials erreicht. Bei der auf diese Weise erzeugten Auskleidung müssen allerdings die peripheren Ränder nachträglich korrigiert werden.

Ferner ist aus der EP 1 081 285 A1 ein Verfahren eines aus einer Pulpe hergestellten Artikels bekannt, bei dem ein eine in der Schrift näher definierter Pulpenbrei spezieller Zusammensetzung in den Hohlraum einer Form eingebracht wird und zusätzlich ein bevorzugt flüssiges Strömungsmittel zum Einsatz kommt, um den Pulpeablagerungskörper an die innere Wand des Hohlraums der Form zu pressen. Das Verfahren kann mit einer Pulpe anderer Zusammensetzung erneut angewendet werden, sodass dadurch ein mehrschichtiger Körper entsteht.

Schließlich offenbart die EP 1 927 447 A2 monolithische, keramische Gieß- und Druckgussformteile für den Kaminbau und entsprechende Verfahren zu deren Herstellung. Hierbei wird eine silikatische Suspension durch Gießen oder mittels eines Druckgusses in eine Gussform mit poröser Oberfläche eingebracht, sodass dadurch ein Scherben gebildet wird, der nach seiner Herstellung von der Gussform getrennt, getrocknet und abschließend in einem Ofen gebrannt wird.

Der Erfindung liegt die Aufgabe zugrunde, ein Verfahren zur Herstellung eines Isolationsformteiles und ein damit hergestelltes Isolationsformteil bereitzustellen, das mit wenigen, einfachen Verfahrensschritten möglichst maßgenau erzeugt werden kann. Ein weiteres Ziel der Erfindung besteht in der Bereitstellung eines geeigneten Gusswerkzeuges zur Anwendung des Verfahrens.

Die Erfindung löst diese Aufgabenstellung mit den Merkmalen der unabhängigen Patentansprüche 1, 14 und 18.
Weitere Ausgestaltungen der Erfindung sind Gegenstand der sich jeweils anschließenden Unteransprüche.

Das erfindungsgemäße Verfahren zur Herstellung eines Isolationsformteils ist durch folgende Verfahrensschritte gekennzeichnet:
- Herstellung einer anorganischen Pulpe aus Wasser, Glas- und/oder Mineralfasern und Schichtsilikat,
- Einbringung der Pulpe in eine zumindest einseitig die Negativform des herzustellenden Isolationsformteils aufweisende Kavität eines Gusswerkzeuges, deren Wandung zumindest teilweise wasserdurchlässig ist,
- Abführung des in der Pulpe vorhandenen wässrigen Anteils,
- Öffnen des Gusswerkzeuges und anschließende Entnahme des erzeugten Isolationsformteils.

Als Schichtsilikate bezeichnet man allgemein Silikate, zu denen beispielsweise gesteinsbildende Minerale, wie die der Glimmergruppe, Chloritgruppe, Kaolin und Serpentingruppe zählen. Die technisch wichtigen und in Sedimentgesteinen verbreiteten Tonminerale sind ebenfalls Schichtsilikate. Für die Erfindung werden allerdings wasserlösliche, synthetische Schichtsilikate bevorzugt, da diese qualitativ hochwertiger sind und reproduzierbare Eigenschaften aufweisen. Der schicht- oder kartenhausartige Aufbau der Schichtsilikate bestimmt deren Form und Eigenschaften. Die gute Translationsfähigkeit entlang der Schichten bedingt zudem eine starke Verformbarkeit der Schichtsilikate. Zwischen den Schichten können zum Beispiel Wassermoleküle und Kationen eingelagert werden. Schichtsilikate sind ferner quellfähig und weisen eine Kationenaustauschkapazität auf.

Weiterhin können synthetische Schichtsilikate spezielle Eigenschaften wie starke Rheologie-Effekte und Gelbildung zeigen. Ein Gelzustand der Pulpe sorgt einerseits für eine gute Faserverteilung durch die Verhinderung der Sedimentation der verhältnismäßig schweren Glas- und/oder Mineralfasern.

Weiterhin sorgt der Gelzustand des synthetischen Schichtsilikats als Binder beim Trocknen des Isolationsformteils für eine signifikante Festigkeit und Steifigkeit. Die Ausbildung der Kartenhausstruktur im Gelzustand führt mutmaßlich zu einer guten Bindung an die anorganischen Fasern und zu einer dreidimensionalen Vernetzung im Isolationsformteil, die wiederum eine hohe Vibrationsbeständigkeit mit sich bringt. Die Biegesteifigkeit des Isolationsformteils kann dabei durch Konzentrationsabstufungen des gelierten Schichtsilikats gesteuert werden, ohne eine erhöhte Sprödigkeit beziehungsweise Bruchneigung des Isolationsformteils in Kauf nehmen zu müssen.

Diese Eigenschaften werden für die vorliegende Erfindung ebenso genutzt wie der Umstand, dass es sich bei den Schichtsilikaten um rein anorganische Stoffe handelt, die ein emissionsfreies Isolationsformteil zur Folge haben, sowohl in der Produktion als auch in der Anwendung.

Auf diese Weise gelingt es mit der Erfindung erstmals, ein Fasergussverfahren zur Herstellung eines Isolationsformteils bereitzustellen, das die Nachteile des Standes der Technik vermeidet.

Durch den Einsatz eines Gusswerkzeuges mit einer Kavität, dessen Wandung zumindest teilweise wasserdurchlässig ist, wird es zudem möglich, der in die Kavität eingebrachten Pulpe auf einfache Weise das darin enthaltene Wasser zu entziehen, so dass lediglich das Isolationsformteil übrig bleibt. Durch den Entzug des Wassers werden die Glas- und/oder Mineralfasern und das Schichtsilikat verdichtet und führen zu einer diese Bestandteile verbindenden Haftung, so dass dadurch das Isolationsformteil geschaffen wird. Die Kavität kann zudem einfach ausgeführt werden, sodass diese beispielsweise nur einseitig die Negativform des zu erzeugenden Isolationsformteiles aufweist. Bevorzugt kann es sich hierbei um die Seite handeln, die mit einem weiteren Bauteil verbunden werden muss. Um bei dem eingangs erwähnten Beispiel des Abgaskatalysators eines Kraftfahrzeuges zu bleiben, wäre dies hierbei die Seite des Isolationsformteils, die in den Mantel eingesetzt werden soll.

Gemäß einer ersten Ausgestaltung der Erfindung wird der Wasserentzug aus der Pulpe durch einen im Vergleich zum Normalluftdruck innerhalb des Gusswerkzeuges erzeugten Überdruck oder Unterdruck bewirkt. Das in der Pulpe enthaltene Wasser kann auf diese Weise beschleunigt über die wasserdurchlässige Wandung der Kavität nach außen abgeführt werden, was entweder durch eine Absaugung oder durch eine innerhalb der Kavität bewirkte Druckerhöhung erreichbar ist. Eine derartige Druckerhöhung ist zum Beispiel erzeugbar, indem beim Schließen des Gusswerkzeuges dessen Oberwerkzeug und Unterwerkzeug zunehmend zusammengeführt werden. Ein Unterdruck ist hingegen beispielsweise mit Hilfe einer Vakuumabsaugung erreichbar. Insbesondere eine Druckerhöhung führt zusätzlich zu einer verstärkten Verdichtung des in der Kavität erzeugten Isolationsformteils, was in vorteilhafter Weise für die Stabilität beziehungsweise die Isolationswirkung des Isolationsformteils nutzbar ist. Das erfindungsgemäße Verfahren führt insbesondere durch die Erzeugung der erwähnten Druckdifferenz in der Kavität zu kurzen Taktzeiten und ist mit geringem Aufwand durchführbar.

Alternativ oder ergänzend zu einer Änderung des Druckes innerhalb der Kavität des Gusswerkzeuges kann der Wasserentzug aus der Pulpe auch durch eine in dem Gusswerkzeug erzeugte Temperaturerhöhung auf einen Wert oberhalb der Raumtemperatur erreicht werden. Durch die Temperaturerhöhung wird der Wasserentzug aus der Pulpe beschleunigt. Ein weiterer Vorteil der Temperaturerhöhung besteht darin, dass das erzeugte Isolationsformteil einen geringeren Anteil an Restfeuchte aufweist, wenn es aus dem Gusswerkzeug entnommen wird. Somit verfügt das auf diese Weise hergestellte Isolationsformteil zu diesem Zeitpunkt über eine höhere Festigkeit.

Da das zu erzeugende Isolationsformteil hinsichtlich seiner Wärme- und gegebenenfalls auch hinsichtlich seiner Schallisolation definierte Eigenschaften aufweisen muss, ist es gemäß einer Weiterbildung der erfindungsgemäßen Lösung von Vorteil, wenn mehrfach nacheinander Pulpe in die Kavität des Gusswerkzeuges eingebracht und dieser jeweils das Wasser entzogen wird. Auf diese Weise gelingt es, ein Isolationsformteil mit zumindest abschnittsweise verstärkten Wandquerschnitten zu erzeugen, sodass die Festigkeit und die Struktur der Wandung des Isolationsformteils entsprechend den an das Bauteil gestellten Anforderungen angepasst werden können.

Darüber hinaus geht ein weiterführender Vorschlag hierzu dahin, Pulpen unterschiedlicher stofflicher Beschaffenheit beziehungsweise Zusammensetzung nacheinander in die Kavität des Gusswerkzeuges einzubringen. Mit dieser Maßnahme kann erreicht werden, dass das Isolationsformteil lokal sich unterscheidende Bereiche mit an die Einbausituation angepassten Eigenschaften aufweist. So können sich beispielsweise Faserbereiche mit unterschiedlichen Temperaturbeständigkeiten lagenweise abwechseln. Die Temperaturbeständigkeit muss dabei dem innerhalb einer Isolationsschicht auftretenden Temperaturgradienten angepasst sein. Auf diese Weise kann zum Beispiel eine Schicht aus Fasern mit einer Temperaturbeständigkeit bis 1000°C mit einer nachfolgenden Schicht kombiniert werden, die eine Temperaturbeständigkeit bis 600°C aufweist. Diese Optimierung führt zu einer Kosten sparenden Herstellung. Dies kann beispielsweise auch bedeuten, dass das Isolationsformteil über Abschnitte mit geringer und Abschnitte mit hoher Isolationswirkung verfügt. Diese Optimierung führt zu einer Material sparenden Herstellung bei optimierter Isolationswirkung. Dabei ist es ebenso möglich, Einlagen aus hochtemperaturbeständigen Fasern an temperaturkritischen Stellen, den so genannten Hotspots, in die Kavität einzuarbeiten, indem man beispielsweise vor dem Einbringen der Pulpe die entsprechenden Bereiche der Kavität abdeckt. Ferner können sich beispielsweise Glas- und/oder Mineralfasern mit unterschiedlichen Faserausrichtungen, Faserstrukturen oder Faserlängen abwechseln.

Dabei ist es ebenso möglich, nur in lokal abgegrenzten Bereichen des zu erzeugenden Isolationsformteils mehrfach Pulpe in die Kavität des Gusswerkzeuges einzubringen, was ebenfalls die zuvor erwähnten Wirkungen nach sich zieht.

Um das gesamte Verfahren zur Herstellung eines Isolationsformteils möglichst weitgehend zu automatisieren, ist es von Vorteil, wenn das aus einem Unterwerkzeug und einem dieses verschließenden Oberwerkzeug bestehende Gusswerkzeug eine mit dem Oberwerkzeug verbundene oder in dieses integrierte Saugvorrichtung aufweist, durch die das Isolationsformteil nach seiner Fertigstellung angesaugt und aus dem Gusswerkzeug gelöst wird, sodass es auf diese Weise aus dem geöffneten Gusswerkzeug entnommen werden kann. Bei der erwähnten Saugvorrichtung kann beispielsweise ein Vakuum erzeugt werden, das ausreichend ist, das Isolationsformteil anzusaugen und auf diese Weise aus dem Unterwerkzeug zu lösen, um es im Anschluss daran aus dem Gusswerkzeug zu entnehmen beziehungsweise an eine nachfolgende Verarbeitungseinheit zu übergeben.

Das Ablösen des Isolationsformteils aus dem Unterwerkzeug kann vereinfacht beziehungsweise verbessert werden, wenn entsprechend einer Weiterbildung des erfindungsgemäßen Verfahrens das Unterwerkzeug eine Druckeinrichtung aufweist oder mit einer Druckeinrichtung verbunden ist. Als Druckeinrichtung kann hierbei beispielsweise ein das Isolationsformteil mechanisch aus dem Unterwerkzeug lösender Stempel oder eine pneumatische, also mit Druckluft wirkende Blaseinrichtung zum Einsatz kommen. In Verbindung mit der zuvor erwähnten Saugvorrichtung im Oberwerkzeug kann somit bei Verwendung einer pneumatischen Druckvorrichtung im Unterwerkzeug eine Luftströmung nach dem Prinzip des Gegenstroms erzeugt werden, wobei einerseits das Isolationsformteil im Oberwerkzeug durch einen Unterdruck angesaugt wird und andererseits ein Luftdruckstrom im Unterwerkzeug das Ablösen des Isolationsformteils bewirkt und beschleunigt.

Nach dem Ablösen des Isolationsformteils aus dem Gusswerkzeug kann dieses in der zuvor beschriebenen Weise an eine nachfolgende Verarbeitungseinheit übergeben und hier weiter verarbeitet werden. Gemäß einer Ausgestaltung des erfindungsgemäßen Verfahrens kann es sich hierbei um eine Trocknungseinheit handeln, in der dem Isolationsformteil durch eine Temperierung auf 200°C bis 250°C seine Restfeuchte entzogen wird. Der Anteil der Restfeuchte des in dem Gusswerkzeug erzeugten Isolationsformteils kann bis zu 70 % betragen.

Im Anschluss hieran wird das Isolationsformteil gemäß einem weiterführenden Vorschlag nach der Erfindung an eine Brennvorrichtung, an ein Trockner-Segment oder eine geeignete, separat beheizbare Vorrichtung übergeben, in der dem Isolationsformteil durch einen Nachbrennvorgang zusätzlich darin noch enthaltenes Kristallwasser entzogen werden kann. Hierbei werden Temperaturen ab 280°C bis etwa 400°C verwendet. Durch diese Maßnahme wird eine zusätzliche Formstabilitätsverbesserung des Isolationsformteils erreicht. Weiterhin wird dadurch die Wasseraufnahme des Isolationsformteils an feuchter Luft unterdrückt, womit sich auch dessen Lagerfähigkeit erhöht.

Nach der Entnahme des Isolationsformteils aus dem Gusswerkzeug wird das Gusswerkzeug gereinigt, um es somit auf den nächstfolgenden Herstellungsvorgang vorzubereiten. Dabei kommt insbesondere der Reinigung der Kavität eine besondere Bedeutung zu. Anwendbar sind hierbei an sich bekannte Reinigungsverfahren, wobei es wegen der Effektivität und der Kürze der erforderlichen Zeit von besonderem Vorteil ist, die Reinigung mittels eines Wasserstrahls oder mittels Druckluft durchzuführen. Nutzbar ist darüber hinaus auch der der Pulpe entzogene wässrige Anteil der Pulpe für die Reinigung.

Zur Einsparung nachfolgender Montageschritte geht ein weiterführender Vorschlag nach der Erfindung dahin, das Isolationsformteil in dem Gusswerkzeug unmittelbar in einen dieses nach seiner Fertigstellung aufnehmenden und mit zahlreichen Durchgangsbohrungen versehenen Mantel einzugießen. Dabei können die in dem Mantel vorhandenen Durchgangsbohrungen zur Abführung des Wassers aus der Pulpe genutzt werden. Eine derartige Vorgehensweise bietet sich insbesondere bei einem Isolationsformteil an, dass in einem eingangs bereits erwähnten Katalysator für ein Kraftfahrzeug zum Einsatz kommt.

Ein durch das zuvor beschriebene Verfahren hergestelltes, aus einem Glasfaser-Schichtsilikatgemisch bestehendes Isolationsformteil ist erfindungsgemäß dadurch gekennzeichnet, dass eine mit Wasser erzeugte Pulpe zur Herstellung des Isolationsformteils einen Anteil ausschließlich synthetischen Schichtsilikates zwischen 0,5% und 2,5% und einen Anteil an Glas- und/oder Mineralfasern von 0,3% bis 1,5% aufweist. Der Anteil des Schichtsilikates beträgt bevorzugt weniger als 2%, wobei in diesem Fall der Anteil der Glas- und/oder Mineralfasern circa 1% ausmacht.

Darüber hinaus ist das Schichtsilikat bevorzugt ein Pulver, wobei allgemein auch wässrige Lösungen einsetzbar sind. Das Schichtsilikat besteht dabei bevorzugt aus den Bestandteilen Siliziumdioxid (SiO₂) und Aluminiumoxid (Al₂O₃).

Eine bevorzugte Zusammensetzung des Schichtsilikats besteht darin, dass dieses einen Anteil Siliziumdioxid (SiO₂) zwischen 55% und 65%, einen Anteil Magnesiumiumoxid (MgO) zwischen 25% und 30%, einen Anteil Lithiumoxid (Li₂O) zwischen 0,7% und 0,9% und einen Anteil Natriumoxid (Na₂O) zwischen 2,5% und 3% aufweist.

Gemäß einer weiteren Ausgestaltung der Erfindung handelt es sich bei der zum Einsatz kommenden Glas- und/oder Mineralfaser zur Herstellung der Pulpe um amorphe Fasern oder kristalline Fasern. Zu den amorphen Fasern zählen hierbei beispielsweise Glasstapelfasern, geschnittene Endlosglasfasern, AES-Hochtemperaturwolle, biolösliche Mineralwolle oder geschnittene Silikatfasern, während als Beispiele für kristalline Fasern polykristalline Wolle oder Einkristallfasern zu nennen sind. Ebenso ist zwischen Kurzfasern und Langfasern zu unterscheiden. Kurzfasern weisen eine hohe Oberflächengüte auf und ermöglichen eine sehr homogene Verteilung innerhalb der Pulpe. Zudem resultieren hieraus sehr geringe Toleranzen bei dem zu erzeugenden Isolationsformteil. Demgegenüber verfügen Langfasern über eine vergleichsweise höhere Festigkeit und Steifigkeit sowie über eine geringere Bruchneigung.
Es liegt auch im Bereich der Erfindung, verschiedene der genannten Fasern miteinander zu mischen.

Ein erfindungsgemäßes Gusswerkzeug zur Herstellung eines Isolationsformteils ermöglicht die Anwendung des zuvor beschriebenen Verfahrens und ist dadurch gekennzeichnet, dass das Gusswerkzeug aus einem Unterwerkzeug und einem dieses verschließenden Oberwerkzeug besteht und die in dem Gusswerkzeug vorhandene Kavität zumindest einseitig der Negativform des zu erzeugenden Isolationsformteils entspricht, wobei zumindest eine Innenoberfläche des Gusswerkzeuges eine Vielzahl einzelner Bohrungen aufweist. Die in dem Gusswerkzeug vorhandenen Bohrungen ermöglichen dabei die Abführung des in der Pulpe vorhandenen Wassers, ohne dass eine Abführung der in der Pulpe vorhandenen Glas- und/oder Mineralfasern beziehungsweise des Schichtsilikats erfolgt. Mit anderen Worten weisen die Bohrungen einen Durchmesser auf, der zur Abführung des wässrigen Anteils der Pulpe geeignet ist, jedoch nicht das Eindringen anderer Stoffe ermöglicht, was bedeutet, dass die in der Pulpe enthaltenen Fasern in der Kavität zurückbleiben. Erfindungsgemäß können die Bohrungen unmittelbar in das Unterwerkzeug und/oder in das Oberwerkzeug eingebracht sein.

Eine andere Möglichkeit besteht darin, die Bohrungen in das Unterwerkzeug und/oder das Oberwerkzeug einzubringen und anschließend beispielsweise eine Art feinmaschiger Gaze in die Kavität des Gusswerkzeuges einzulegen, so dass die Poren der Gaze die wasserdurchlässige Oberfläche der Kavität des Gusswerkzeuges bilden.

Zur Verbesserung der Abführung des in der Pulpe vorhandenen wässrigen Anteils ist es von Vorteil, wenn zumindest ein Teil der Bohrungen strömungsleitend mit einer Saugvorrichtung verbunden sind. Der durch die Saugvorrichtung erzeugte Unterdruck ermöglicht eine Beschleunigung des Herstellungsvorganges des Isolationsformteils.

Darüber hinaus geht ein weiterführender Vorschlag nach der Erfindung dahin, dass ein Teil der vorhandenen Bohrungen mit einer pneumatischen Druckeinrichtung verbunden und der verbleibende Teil der Bohrungen zur Abführung des wässrigen Anteils der Pulpe nutzbar ist. Natürlich liegt auch eine Kombination einer Saugvorrichtung mit einer Druckeinrichtung im Bereich der Erfindung, so dass in diesem Fall ein erhöhter Innendruck in der Kavität zum Austreiben des in der Pulpe vorhandenen Wassers genutzt wird, während an anderer Stelle gleichzeitig durch die Saugvorrichtung ein Absaugen des Wassers erfolgt.

In diesem Fall ist es vorteilhaft, wenn die mit der pneumatischen Druckeinrichtung verbundenen Bohrungen in dem Oberwerkzeug und die Bohrungen zur Wasserabführung in dem Unterwerkzeug vorhanden sind.

Bevorzugt handelt es sich bei den Bohrungen um Mikrobohrungen, deren Einbringung in das Gusswerkzeug auf unterschiedliche Weise erfolgen kann. So besteht die Möglichkeit, die Mikrobohrungen mittels einer Elektronenstrahlbohrvorrichtung, mittels einer Laser-Schneideinrichtung oder mittels einer Laser-Wasserstrahl-Schneideinrichtung zu erzeugen. Bevorzugt weisen die Mikrobohrungen erfindungsgemäß einen Durchmesser zwischen 30pm und 100 µm auf.

Die Erfindung wird nachfolgend anhand der beigefügten Zeichnungen näher erläutert. Das gezeigte Ausführungsbeispiel stellt dabei keine Einschränkung auf die dargestellte Variante dar, sondern dient lediglich der Erläuterung eines Prinzips der Erfindung. Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: ein vereinfachtes Prinzipschaltbild der Herstellung einer Pulpe,
- Figur 2:: eine schematisch stark vereinfachte Darstellung eines Gusswerkzeuges,
und
- Figur 3:: den Blick in einen Mantel eines Abgaskatalysators eines Kraftfahrzeuges mit einem darin eingesetzten Isolationsformteil.

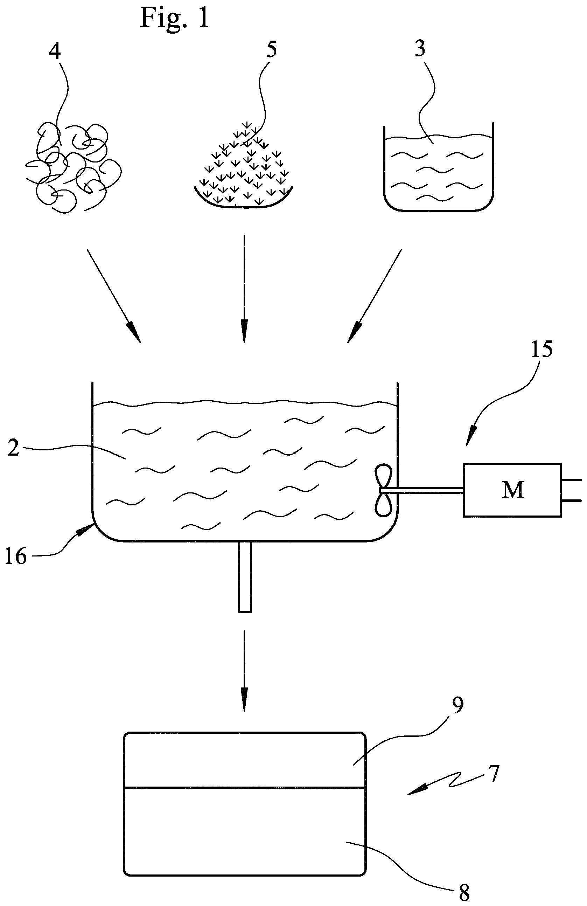

Die in der **Figur 1** vereinfacht dargestellte Herstellung einer Pulpe 2 erfolgt durch die Vermischung der Grundbestandteile in einem Behälter 16. Dabei werden Wasser 3, Glas- und/oder Mineralfasern 4 in Form von Hochtemperaturwolle und Schichtsilikat 5 in den Behälter 16 eingebracht und mit Hilfe einer Rührvorrichtung 15 so lange durchmischt, bis eine homogene Pulpe 2 entstanden ist. Zuerst wird dabei das synthetische Schichtsilikat 5 langsam in kaltes Wasser gegeben, um ein Verklumpen zu vermeiden. Anschließend erfolgt über einen Zeitraum von etwa 1 Stunde ein Verrühren mit hoher Geschwindigkeit, was beispielsweise mit einem Rotor-Stator-System erfolgen kann. Hierauf folgend werden die Glas- und/oder Mineralfasern 4 mit einer langsam drehenden Rührvorrichtung 15 mit niedriger Scherwirkung eingemischt, um die Glas- und/oder Mineralfasern 4 möglichst wenig zu schädigen. Die so geschaffene Pulpe 2 kann anschließend in ein hierfür geeignetes und in der Figur 1 nur schematisch dargestelltes Gusswerkzeug 7 gegossen werden, das aus einem Unterwerkzeug 8 und einem dieses verschließenden Oberwerkzeug 9 besteht.

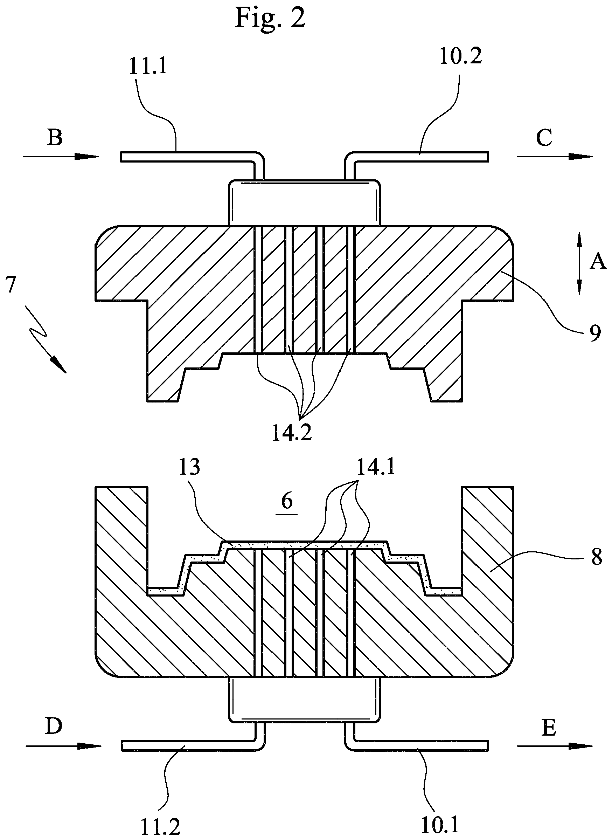

Aus der **Figur 2** geht schematisch ebenfalls stark vereinfacht eine beispielhafte Darstellung für ein derartiges Gusswerkzeug 7 hervor. Dieses Gusswerkzeug 7 besteht zunächst aus einem Unterwerkzeug 8 und einem Oberwerkzeug 9. Das Oberwerkzeug 9 kann bei dem Beispiel in Figur 2 in Richtung des Doppelpfeils A bewegt werden und ist somit geeignet, das Unterwerkzeug 8 zu öffnen beziehungsweise zu verschließen. Im geschlossenen Zustand des Gusswerkzeuges 7 weist es eine Kavität 6 auf, deren Geometrie der Negativform des zu erzeugenden Isolationsformteils 1 entspricht. Die Besonderheit der Ausführung des hier gezeigten Gusswerkzeuges 7 besteht darin, dass zumindest ein Teil der Wandung der Kavität 6 wasserdurchlässig gestaltet ist. Hierzu wird bei dem in Figur 2 dargestellten Beispiel ein Mantel 13 eines zu isolierenden Abgaskatalysators für ein Kraftfahrzeug in die Kavität 6 des Unterwerkzeugs 8 eingelegt. Dieser Mantel 13 ist mit einer Vielzahl Durchgangsbohrungen 12 ausgestattet, die eine thermische und akustische Isolierung des damit ausgestatteten Abgaskatalysators bewirken und im erfindungsgemäßen Sinne dazu genutzt werden, das Wasser aus der Pulpe 2 abzuführen. Unterhalb des in das Unterwerkzeug 8 eingesetzten Mantels 13 weist das Unterwerkzeug 8 eine Vielzahl Bohrungen 14.1 auf, über die das Wasser 3 aus der Pulpe 2 abgeführt wird. Zur Verbesserung der Wirkung der Abführung des Wassers 3 ist bei der dargestellten Ausführungsvariante eine Saugvorrichtung 10.1 strömungsleitend mit den Bohrungen 14.1 verbunden. Über die Saugvorrichtung 10.1 wird ein Unterdruck erzeugt und das Wasser 3 in Richtung des Pfeils E aus der Pulpe 2 abgesaugt.
Betrachtet man nun das Oberwerkzeug 9 des Gusswerkzeuges 7 in Figur 2, so fällt auf, dass auch hier Bohrungen 14.2 vorgesehen sind, die im vorliegenden Fall dazu dienen, eine Druckerhöhung auf das zu erzeugende Isolationsformteil 1 zu bewirken, wozu die Bohrungen 14.2 im Oberwerkzeug 9 strömungsleitend mit einer Druckeinrichtung 11.1 verbunden sind, so dass dem Oberwerkzeug 9 beispielsweise Druckluft in Richtung des Pfeils B zugeführt werden kann.
Ist das auf diese Weise hergestellte Isolationsformteil 1 fertig gestellt, kann das Gusswerkzeug 7 geöffnet werden. Dabei werden über geeignete Steuerungsventile die Saugvorrichtung 10.1 und die Druckeinrichtung 11.1 geschlossen. Nunmehr kann über eine Druckeinrichtung 11.2 im Unterwerkzeug 8 in Richtung des Pfeils D durch Einbringung von Druckluft eine Druckerhöhung auf das Isolationsformteil 1 aufgebracht werden, was zu einem Ablösen des Isolationsformteils 1 aus dem Unterwerkzeug 8 führt. Zeitgleich erfolgt das Ansaugen des Isolationsformteils 1 mit Hilfe einer Saugvorrichtung 10.2 im Oberwerkzeug 9 des Gusswerkzeuges 7, deren Saugvorrichtung in Richtung des Pfeils C ein Vakuum erzeugt. Das dadurch fixierte Isolationsformteil 1 kann auf diese Weise lösbar fixiert und an eine nachfolgende Verarbeitungseinheit übergeben werden. Die Bohrungen 14.1 im Unterwerkzeug 8 und die Bohrungen 14.2 im Oberwerkzeug 9 können somit nach der Herstellung des Isolationsformteils 1 für eine weitere Anwendung, nämlich die Fixierung und Übergabe des Isolationsformteiles 1 genutzt werden.

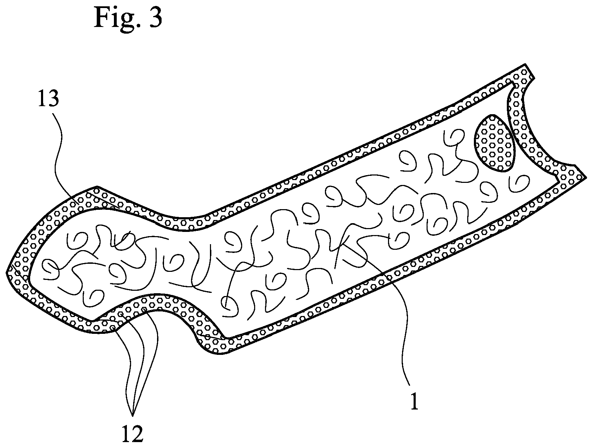

Die **Figur 3** erlaubt einen Blick in einen Mantel 13 eines Abgaskatalysators mit einem darin eingesetzten Isolationsformteil 1. Der Mantel 13 weist eine Vielzahl Durchgangsbohrungen 12 und eine aufwändig gestaltete Innengeometrie auf, der sich das Isolationsformteil 1 anpassen muss, um eine optimale Isolationswirkung zu erreichen.

Insgesamt wird mit der Erfindung also ein Verfahren zur Herstellung eines Isolationsformteils (1) vorgestellt, das durch folgende Verfahrensschritte gekennzeichnet ist:
- Herstellung einer anorganischen Pulpe (2) aus Wasser (3), Glasfasern (4) und Schichtsilikat (5),
- Einbringung der Pulpe (2) in eine zumindest einseitig die Negativform des herzustellenden Isolationsformteils (1) aufweisende Kavität (6) eines Gusswerkzeuges (7), deren Wandung zumindest teilweise wasserdurchlässig ist,
- Abführung des in der Pulpe (2) vorhandenen wässrigen Anteils,
- Öffnen des Gusswerkzeuges (7) und anschließende Entnahme des erzeugten Isolationsformteils (1).

Darüber hinaus ist Gegenstand der Erfindung ein Isolationsformteil, das durch dieses Verfahren hergestellt und dadurch gekennzeichnet ist, dass eine mit Wasser (3) erzeugte Pulpe (2) zur Herstellung des aus einem Glasfaser-Schichtsilikatgemisch bestehenden Isolationsformteils (1) einen Anteil ausschließlich synthetischen Schichtsilikates (5) zwischen 0,5% und 2,5 % und einen Anteil an Glasfasern (4) von 0,3 bis 1,5% aufweist.

Weiterhin betrifft die Erfindung ein Gusswerkzeug zur Herstellung eines Isolationsformteils unter Anwendung des Verfahrens, wobei dieses dadurch gekennzeichnet, dass das Gusswerkzeug (7) aus einem Unterwerkzeug (8) und einem dieses verschließenden Oberwerkzeug (9) besteht und die in dem Gusswerkzeug (7) vorhandene Kavität (6) zumindest einseitig der Negativform des zu erzeugenden Isolationsformteils (1) einspricht, wobei wenigstens eine Innenoberfläche des Gusswerkzeuges (7) eine Vielzahl einzelner Bohrungen (14.1, 14.2) aufweist.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Insbesondere beschränkt sich die Erfindung nicht auf die nachfolgend angegebenen Merkmalskombinationen, sondern es können auch für den Fachmann offensichtlich ausführbare andere Kombinationen und Teilkombination aus den offenbarten Merkmalen gebildet werden.

### BEZUGSZEICHENLISTE:

- 1: Isolationsformteil
- 2: Pulpe
- 3: Wasser
- 4: Glas- und/oder Mineralfasern
- 5: Schichtsilikat
- 6: Kavität
- 7: Gusswerkzeug
- 8: Unterwerkzeug
- 9: Oberwerkzeug
- 10.1: Saugvorrichtung
- 10.2: Saugvorrichtung
- 11.1: pneumatische Druckeinrichtung
- 11.2: pneumatische Druckeinrichtung
- 12: Durchgangsbohrungen
- 13: Mantel
- 14.1: Bohrungen / Mikrobohrungen
- 14.2: Bohrungen / Mikrobohrungen
- 15: Rührvorrichtung
- 16: Behälter

- A, B, C, D, E: Bewegungsrichtung

## Patentansprüche

1. Verfahren zur Herstellung eines Isolationsformteils (1),
**gekennzeichnet durch** folgende Verfahrensschritte:
- Herstellung einer anorganischen Pulpe (2) aus Wasser (3), Glas- und/oder Mineralfasern (4) und Schichtsilikat (5),
- Einbringung der Pulpe (2) in eine zumindest einseitig die Negativform des herzustellenden Isolationsformteils (1) aufweisende Kavität (6) eines Gusswerkzeuges (7), deren Wandung zumindest teilweise wasserdurchlässig ist,
- Abführung des in der Pulpe (2) vorhandenen wässrigen Anteils,
- Öffnen des Gusswerkzeuges (7) und anschließende Entnahme des erzeugten Isolationsformteils (1).

2. Verfahren nach Anspruch 1,
**dadurch gekennzeichnet, dass**
der Wasserentzug aus der Pulpe (2) durch einen im Vergleich zum Normalluftdruck innerhalb des Gusswerkzeuges (7) erzeugten Überdruck oder Unterdruck bewirkt wird.

3. Verfahren nach Anspruch 1 oder 2,
**dadurch gekennzeichnet, dass**
der Wasserentzug durch eine in dem Gusswerkzeug (7) erzeugte Temperaturerhöhung auf einen Wert oberhalb der Raumtemperatur bewirkt oder beschleunigt wird.

4. Verfahren nach einem der vorstehend genannten Ansprüche,
**dadurch gekennzeichnet, dass**
mehrfach nacheinander Pulpe (2) in die Kavität (6) des Gusswerkzeuges (7) eingebracht und dieser jeweils das Wasser (3) entzogen wird.

5. Verfahren nach Anspruch 4,
**dadurch gekennzeichnet, dass**
Pulpen (2) unterschiedlicher stofflicher Beschaffenheit beziehungsweise Zusammensetzung nacheinander in die Kavität (6) des Gusswerkzeuges (7) eingebracht werden.

6. Verfahren nach einem der Ansprüche 4 oder 5,
**dadurch gekennzeichnet, dass**
nur in lokal abgegrenzten Bereichen des zu erzeugenden Isolationsformteils (1) mehrfach Pulpe (2) in die Kavität (6) des Gusswerkzeuges (7) eingebracht wird.

7. Verfahren nach einem der vorstehend genannten Ansprüche,
**dadurch gekennzeichnet, dass**
das aus einem Unterwerkzeug (8) und einem dieses verschließenden Oberwerkzeug (9) bestehende Gusswerkzeug (7) eine mit dem Oberwerkzeug (9) verbundene oder in dieses integrierte Saugvorrichtung (10.2) aufweist, durch die das Isolationsformteil (1) nach seiner Fertigstellung angesaugt und aus dem Unterwerkzeug (8) gelöst wird, sodass es auf diese Weise aus dem geöffneten Gusswerkzeug (7) entnommen werden kann.

8. Verfahren nach einem der vorstehend genannten Ansprüche,
**dadurch gekennzeichnet, dass**
das Unterwerkzeug (8) zum Ablösen des Isolationsformteils (1) eine Druckeinrichtung (11.2) aufweist oder mit einer Druckeinrichtung (11.2) verbunden ist, durch die das Isolationsformteil (1) nach seiner Fertigstellung aus dem Unterwerkzeug (8) gelöst wird.

9. Verfahren nach einem der vorstehend genannten Ansprüche,
**dadurch gekennzeichnet, dass**
das aus dem Gusswerkzeug (7) entnommene Isolationsformteil (1) an eine Trocknungseinheit übergeben wird, in der dem Isolationsformteil (1) durch eine Temperierung auf 200°C bis 250°C seine Restfeuchte entzogen wird.

10. Verfahren nach einem der vorstehend genannten Ansprüche,
**dadurch gekennzeichnet, dass**
das aus dem Gusswerkzeug (7) entnommene Isolationsformteil (1) an eine Brennvorrichtung übergeben wird, in der dem Isolationsformteil (1) durch einen Nachbrennvorgang Kristallwasser entzogen wird.

11. Verfahren nach einem der vorstehend genannten Ansprüche,
**dadurch gekennzeichnet, dass**
das Gusswerkzeug (7) nach der Entnahme des Isolationsformteils (1) gereinigt wird.

12. Verfahren nach Anspruch 11,
**dadurch gekennzeichnet, dass**
die Reinigung mittels eines Wasserstrahls, einer Druckluftreinigung oder mittels des der Pulpe entzogenen wässrigen Anteils erfolgt.

13. Verfahren nach einem der vorstehend genannten Ansprüche,
**dadurch gekennzeichnet, dass**
das Isolationsformteil (1) in dem Gusswerkzeug (7) unmittelbar in einen dieses nach seiner Fertigstellung aufnehmenden, mit zahlreichen Durchgangsbohrungen (12) versehenen Mantel (13) eingegossen wird, dessen Durchgangsbohrungen (12) zur Abführung des Wassers (3) aus der Pulpe (2) genutzt werden.

14. Isolationsformteil, hergestellt durch ein Verfahren nach einem der vorstehend genannten Ansprüche,
**dadurch gekennzeichnet, dass**
eine mit Wasser (3) erzeugte Pulpe (2) zur Herstellung des aus einem Glasfaser-Schichtsilikatgemisch beziehungsweise Mineralfaser-Schichtsilikatgemisch bestehenden Isolationsformteils (1) einen Anteil ausschließlich synthetischen Schichtsilikates (5) zwischen 0,5% und 2,5% und einen Anteil an Glas- und/oder Mineralfasern (4) von 0,3 bis 1,5% aufweist.

15. Isolationsformteil nach Anspruch 14,
**dadurch gekennzeichnet, dass**
das Schichtsilikat (5) ein Pulver mit den Bestandteilen Siliziumdioxid (SiO₂) und Aluminiumoxid (Al₂O₃) ist.

16. Isolationsformteil nach einem der Ansprüche 14 oder 15,
**dadurch gekennzeichnet, dass**
das Schichtsilikat (5) einen Anteil Siliziumdioxid (SiO₂) zwischen 55% und 65%, einen Anteil Magnesiumiumoxid (MgO) zwischen 25% und 30%, einen Anteil Litiumoxid (Li₂O) zwischen 0,7% und 0,9% und einen Anteil Natriumoxid (Na₂O) zwischen 2,5% und 3% aufweist.

17. Isolationsformteil nach einem der Ansprüche 14 bis 16,
**dadurch gekennzeichnet, dass**
es sich bei der Glas- und/oder Mineralfaser (4) zur Herstellung der Pulpe (2) amorphe Fasern oder kristalline Fasern handelt.

18. Gusswerkzeug zur Herstellung eines Isolationsformteils nach einem der Ansprüche 14 bis 17 unter Anwendung eines Verfahrens nach einem der Ansprüche 1 bis 13,
**dadurch gekennzeichnet, dass**
das Gusswerkzeug (7) aus einem Unterwerkzeug (8) und einem dieses verschließenden Oberwerkzeug (9) besteht und die in dem Gusswerkzeug (7) vorhandene Kavität (6) zumindest einseitig der Negativform des zu erzeugenden Isolationsformteils (1) entspricht, wobei wenigstens eine Innenoberfläche des Gusswerkzeuges (7) eine Vielzahl einzelner Bohrungen (14.1, 14.2) aufweist.

19. Gusswerkzeug nach Anspruch 18,
**dadurch gekennzeichnet, dass**
in die Kavität (6) des Gusswerkzeuges (7) eine die Bohrungen (14.1, 14.2) abdeckende, feinmaschige Gaze eingelegt ist.

20. Gusswerkzeug nach Anspruch 18 oder 19,
**dadurch gekennzeichnet, dass**
zumindest ein Teil der Bohrungen (14.1, 14.2) strömungsleitend mit einer Saugvorrichtung (10.1, 10.2) verbunden sind.

21. Gusswerkzeug nach einem der Ansprüche 18 bis 20,
**dadurch gekennzeichnet, dass**
ein Teil der vorhandenen Bohrungen (14.1, 14.2) mit einer pneumatischen Druckeinrichtung (11.1, 11.2) verbunden und der verbleibende Teil der Bohrungen (14.1, 14.2) zur Wasserabführung nutzbar ist.

22. Gusswerkzeug nach Anspruch 21,
**dadurch gekennzeichnet, dass**
die mit der pneumatischen Druckeinrichtung (11.1) verbundenen Bohrungen (14.2) in dem Oberwerkzeug (9) und die Bohrungen (14.1) zur Wasserabführung in dem Unterwerkzeug (8) vorhanden sind.

23. Gusswerkzeug nach einem der Ansprüche 18 bis 22,
**dadurch gekennzeichnet, dass**
die mittels einer Elektronenstrahlbohrvorrichtung, mittels einer Laser-Schneideinrichtung oder mittels einer Laser-Wasserstrahl-Schneideinrichtung erzeugten Bohrungen (14.1, 14.2) Mikrobohrungen sind und einen Durchmesser zwischen 30pm und 100 µm aufweisen.

## Claims

1. Process for producing a molded insulating part (1), **characterized by** the following process steps:
- production of an inorganic pulp (2) composed of water (3), glass fibers and/or mineral fibers (4) and sheet silicate (5),
- introduction of the pulp (2) into a cavity (6) of a casting tool (7) whose wall is at least partially water-permeable, which cavity (6) has on at least one side the negative shape of the molded insulating part (1) to be produced,
- removal of the aqueous fraction present in the pulp (2),
- opening of the casting tool (7) and subsequent taking-out of the produced molded insulating part (1) .

2. Process according to Claim 1, **characterized in that** the withdrawal of water from the pulp (2) is effected by means of a superatmospheric pressure or subatmospheric pressure produced within the casting tool (7) relative to normal atmospheric pressure.

3. Process according to Claim 1 or 2, **characterized in that** the withdrawal of water is effected or accelerated by a temperature increase to a value above room temperature produced in the casting tool (7).

4. Process according to any of the preceding claims, **characterized in that** pulp (2) is introduced into the cavity (6) of the casting tool (7) a plurality of times in succession and the water (3) is withdrawn therefrom in each case.

5. Process according to Claim 4, **characterized in that** pulps (2) having a different materials nature or composition are introduced in succession into the cavity (6) of the casting tool (7).

6. Process according to either Claim 4 or 5, **characterized in that** pulp (2) is introduced a plurality of times into the cavity (6) of the casting tool (7) only in locally delineated regions of the molded insulating part (1) to be produced.

7. Process according to any of the preceding claims, **characterized in that** the casting tool (7) consisting of a lower tool (8) and an upper tool (9) which closes the lower tool (8) has a suction device (10.2) which is connected to or integrated into the upper tool (9) and by means of which the molded insulating part (1) is, after it has been manufactured, sucked in and detached from the lower tool (8) so that it can in this way be taken from the opened casting tool (7).

8. Process according to any of the preceding claims, **characterized in that** the lower tool (8) has, for detachment of the molded insulating part (1), a pressure device (11.2) or is connected to a pressure device (11.2) by means of which the molded insulating part (1) is, after it has been manufactured, released from the lower tool (8).

9. Process according to any of the preceding claims, **characterized in that** the molded insulating part (1) taken from the casting tool (7) is transferred to a drying unit in which the residual moisture is withdrawn from the molded insulating part (1) by means of heat treatment at from 200°C to 250°C.

10. Process according to any of the preceding claims, **characterized in that** the molded insulating part (1) taken from the casting tool (7) is transferred to a firing apparatus in which water of crystallization is withdrawn from the molded insulating part (1) by means of a subsequent firing procedure.

11. Process according to any of the preceding claims, **characterized in that** the casting tool (7) is cleaned after the molded insulating part (1) has been taken out.

12. Process according to Claim 11, **characterized in that** the cleaning is carried out by means of a waterjet, pressurized air cleaning or by means of the aqueous fraction withdrawn from the pulp.

13. Process according to any of the preceding claims, **characterized in that** the molded insulating part (1) is, in the casting tool (7), poured directly into an outer wall (13) which accommodates this after its manufacture and is provided with numerous through-holes (12), the through-holes (12) of which are utilized for removing the water (3) from the pulp (2).

14. Molded insulating part produced by a process according to any of the preceding claims, **characterized in that** a pulp (2) produced by using water (3) for producing the molded insulating part (1) consisting of a glass fiber/sheet silicate mixture or mineral fiber/sheet silicate mixture has a proportion of exclusively synthetic sheet silicate (5) in the range from 0.5% to 2.5% and a proportion of glass fibers and/or mineral fibers (4) of from 0.3 to 1.5%.

15. Molded insulating part according to Claim 14, **characterized in that** the sheet silicate (5) is a powder having the constituents silicon dioxide (SiO₂) and aluminum oxide (Al₂O₃).

16. Molded insulating part according to either Claim 14 or 15, **characterized in that** the sheet silicate (5) has a proportion of silicon dioxide (SiO₂) in the range from 55% to 65%, a proportion of magnesium oxide (MgO) in the range from 25% to 30%, a proportion of lithium oxide (Li₂O) in the range from 0.7% to 0.9% and a proportion of sodium oxide (Na₂O) in the range from 2.5% to 3%.

17. Molded insulating part according to any of Claims 14 to 16, **characterized in that** the glass fibers and/or mineral fibers (4) for producing the pulp (2) are amorphous fibers or crystalline fibers.

18. Casting tool for producing a molded insulating part according to any of Claims 14 to 17 using a process according to any of Claims 1 to 13, **characterized in that** the casting tool (7) consists of a lower tool (8) and an upper tool (9) which closes the lower tool (8) and the cavity (6) present in the casting tool (7) corresponds at least on one side to the negative shape of the molded insulating part (1) to be produced, where at least one inner surface of the casting tool (7) has a plurality of individual holes (14.1, 14.2).

19. Casting tool according to Claim 18, **characterized in that** a fine-meshed gauze covering the holes (14.1, 14.2) has been laid into the cavity (6) of the casting tool (7).

20. Casting tool according to Claim 18 or 19, **characterized in that** at least one part of the holes (14.1, 14.2) are hydrodynamically connected to a suction device (10.1, 10.2).

21. Casting tool according to any of Claims 18 to 20, **characterized in that** one part of the holes (14.1, 14.2) are connected to a pneumatic pressure device (11.1, 11.2) and the remaining part of the holes (14.1, 14.2) are utilizable for the removal of water.

22. Casting tool according to Claim 21, **characterized in that** the holes (14.2) joined to the pneumatic pressure device (11.1) are present in the upper tool (9) and the holes (14.1) for the removal of water are present in the lower tool (8).

23. Casting tool according to any of Claims 18 to 22, **characterized in that** the holes (14.1, 14.2) produced by means of an electron beam drilling apparatus, by means of a laser cutting device or by means of a laser-waterjet cutting device are microholes and have a diameter in the range from 30 µm to 100 µm.

## Revendications

1. Procédé de fabrication d'une pièce moulée d'isolation (1),
**caractérisé par** les étapes suivantes :
- fabrication d'une pâte inorganique (2) composée d'eau (3), de fibres de verre et/ou minérales (4) et de phyllosilicate (5),
- introduction de la pâte (2) dans une cavité (6) d'un outil de moulage (7), présentant sur au moins un côté la forme négative de la pièce moulée d'isolation (1) à fabriquer, dont la paroi est au moins partiellement perméable à l'eau,
- évacuation de la fraction aqueuse présente dans la pâte (2),
- ouverture de l'outil de moulage (7) et prélèvement consécutif de la pièce moulée d'isolation (1) produite.

2. Procédé selon la revendication 1,
**caractérisé en ce que** la déshydratation de la pâte (2) est provoquée par une surpression ou une dépression par comparaison à la pression atmosphérique normale à l'intérieur de l'outil de moulage (7).

3. Procédé selon la revendication 1 ou 2,
**caractérisé en ce que** la déshydratation est provoquée ou accélérée par une augmentation de température produite dans l'outil de moulage (7) à une valeur supérieure à la température ambiante.

4. Procédé selon l'une des revendications précédentes,
**caractérisé en ce que** la pâte (2) est introduite dans la cavité (6) de l'outil de moulage (7) et **en ce que** l'eau (3) en est retirée consécutivement de multiples fois.

5. Procédé selon la revendication 4,
**caractérisé en ce que** des pâtes (2) de natures ou de compositions différentes en ce qui concerne le matériau sont introduites consécutivement dans la cavité (6) de l'outil de moulage (7).

6. Procédé selon l'une des revendications 4 ou 5, **caractérisé en ce que** de la pâte (2) n'est introduite de manière répétée dans la cavité (6) de l'outil de moulage (7) que dans des zones locales délimitées de la pièce moulée d'isolation (1) produite.

7. Procédé selon l'une des revendications précédentes,
**caractérisé en ce qu'**un outil de moulage (7) constitué d'un outil inférieur (8) et d'un outil supérieur (9) fermant celui-ci comporte un dispositif d'aspiration (10.2) relié à l'outil supérieur (9) ou intégré à celui-ci, au moyen duquel la pièce moulée d'isolation (1) est soumise à une aspiration après sa fixation et est séparée de l'outil inférieur (8), de manière à ce qu'elle puisse ainsi être retirée de l'outil de moulage (7) ouvert.

8. Procédé selon l'une des revendications précédentes,
**caractérisé en ce que** l'outil inférieur (8) comporte un moyen de pression (11.2) destiné à séparer la pièce moulée d'isolation (1) ou est reliée à un moyen de pression (11.2), au moyen duquel la pièce moulée d'isolation (1) est séparée, après sa finition, de l'outil inférieur (8).

9. Procédé selon l'une des revendications précédentes,
**caractérisé en ce que** la pièce moulée d'isolation (1) retirée de l'outil de moulage (7) est transférée à une unité de séchage dans laquelle l'humidité résiduelle est éliminée de la pièce moulée d'isolation (1) par une régulation de température entre 200°C et 250°C.

10. Procédé selon l'une des revendications précédentes,
**caractérisé en ce que** la pièce moulée d'isolation (1) retirée de l'outil de moulage (7) est transférée à un dispositif de combustion dans lequel l'eau de cristallisation est éliminée de la pièce moulée d'isolation (1) par un processus de postcombustion.

11. Procédé selon l'une des revendications précédentes,
**caractérisé en ce que** l'outil de moulage (7) est nettoyé après que la pièce moulée d'isolation (1) a été retirée.

12. Procédé selon la revendication 11,
**caractérisé en ce que** le nettoyage est effectué au moyen d'un jet d'eau, par nettoyage par de l'air sous pression ou au moyen de la fraction aqueuse extraite de la pâte.

13. Procédé selon l'une des revendications précédentes,
**caractérisé en ce que** la pièce moulée d'isolation (1) est directement moulée dans l'outil de moulage (7) dans une chemise (13) recevant celle-ci après sa finition et munie de nombreuses perforations traversantes (12), lesdites perforations traversantes (12) étant utilisées pour l'évacuation de l'eau (3) hors de la pâte (2).

14. Pièce moulée d'isolation, fabriquée par un procédé selon l'une des revendications précédentes, **caractérisée en ce qu'**une pâte (2) produite avec de l'eau (3) pour fabriquer la pièce moulée d'isolation (1), constituée d'un mélange de fibres de verre et de phyllosilicate ou d'un mélange de fibres minérales et d'un phyllosilicate, comporte une fraction de phyllosilicate (5) exclusivement synthétique comprise entre 0,5 % et 2,5 % et une fraction de fibres de verre et/ou minérales (4) de 0,3 à 1,5 %.

15. Pièce moulée d'isolation selon la revendication 14,
**caractérisée en ce que** le phyllosilicate (5) est une poudre ayant pour constituants du dioxyde de silicium (SiO₂) et de l'oxyde d'aluminium (Al₂O₃).

16. Pièce moulée d'isolation selon l'une des revendications 14 ou 15,
**caractérisée en ce que** le phyllosilicate (5) présente une fraction de dioxyde de silicium (SiO₂) comprise entre 55 % et 65 %, une fraction de d'oxyde de magnésium (MgO) comprise entre 25 % et 30 %, une fraction d'oxyde de lithium (Li₂O) comprise entre 0,7 % et 0,9 % et une fraction d'oxyde d'azote (Na₂O) comprise entre 2,5 % et 3 %.

17. Pièce moulée d'isolation selon l'une des revendications 14 à 16,
**caractérisée en ce que** les fibres de verre et/ou minérale (4) destinées à la fabrication de la pâte (2) sont des fibres amorphes ou des fibres cristallines.

18. Outil de moulage destiné à la fabrication d'une pièce moulée d'isolation selon l'une des revendications 14 à 17 par utilisation d'un procédé selon l'une des revendications 1 à 13,
**caractérisé en ce que** l'outil de moulage (7) est constitué d'un outil inférieur (8) et d'un outil supérieur (9) fermant celui-ci et **en ce que** la cavité (6) présente dans l'outil de moulage (7) correspond au moins sur un côté à la forme négative de la pièce moulée d'isolation (1) à produire, dans lequel au moins une surface interne de l'outil de moulage (7) présente une pluralité de perforations individuelles (14.1, 14.2).

19. Outil de moulage selon la revendication 18,
**caractérisé en ce qu'**une gaze à maillage fin recouvrant les perforations (14.1, 14.2) est placée dans la cavité (6) de l'outil de moulage (7).

20. Outil de moulage selon la revendication 18 ou 19,
**caractérisé en ce qu'**au moins une partie des perforations (14.1, 14.2) sont reliées de manière à permettre un écoulement à un dispositif d'aspiration (10.1, 10.2).

21. Outil de moulage selon l'une des revendications 18 à 20,
**caractérisé en ce qu'**une partie des perforations (14.1, 14.2) présentes sont reliées à un moyen de pression pneumatique (11.1, 11.2) et **en ce que** la partie restante des perforations (14.1, 14.2) peuvent être utilisées pour évacuer l'eau.

22. Outil de moulage selon la revendication 21, **caractérisé en ce que** les perforations (14.2) reliées au moyen de pression pneumatique (11.1) dans l'outil supérieur (9) et les perforations (14.1) destinées à l'évacuation de l'eau sont présentes dans l'outil inférieur (8).

23. Outil de moulage selon l'une des revendications 18 à 22,
**caractérisé en ce que** des perforations (14.1, 14.2) produites au moyen d'un dispositif de perforation par faisceau électronique, au moyen d'un dispositif de découpage à laser ou au moyen d'un dispositif de découpage à laser-jet d'eau sont des micro-perforations et présentent un diamètre compris entre 30 µm et 100 µm.
